# EUROPÄISCHE PATENTSCHRIFT

(11) **EP 1 050 156 B1**
(45) Veröffentlichungstag und Bekanntmachung des Hinweises auf die Patenterteilung: **15.12.2004**
(21) Anmeldenummer: 99907268.9
(22) Anmeldetag: 22.01.1999
(51) Int. Cl.: H04M 11/06

(54) **VERFAHREN ZUR DIGITALEN DATENÜBERTRAGUNG MIT VARIABLE BANDBREITE**
METHOD FOR DIGITALLY TRANSMITTING DATA WITH A VARIABLE BANDWIDTH
PROCEDE DE TRANSMISSION NUMERIQUE DE DONNEES A LARGEUR DE BANDE VARIABLE

(30) Priorität: 23.01.1998 DE 19802600
(43) Veröffentlichungstag der Anmeldung: 08.11.2000
(73) Patentinhaber: SIEMENS AKTIENGESELLSCHAFT, 80333 München (DE)
(72) Erfinder: WERNER, Thomas, D-81375 München (DE); SCHIERBLING, Claudia, D-90473 Nürnberg (DE)
(86) Internationale Anmeldenummer: PCT/DE1999/000159
(87) Internationale Veröffentlichungsnummer: WO 1999/038289

(56) Entgegenhaltungen:
- EP-A- 0 806 852
- WO-A-96/37069
- WO-A-97/36429
- ITU: "ITU-T Recommendation M.3010" ITU-T TELECOMMUNICATION STANDARIZATION SECTOR OF ITU, 5. Oktober 1992 (1992-10-05), Seiten 1-6, XP002088659

## Beschreibung

Die vorliegende Erfindung bezieht sich auf ein Verfahren zur digitalen Datenübertragung mit variabler Bandbreite in einem Netzwerk, das wenigstens einen Server, einen Benutzer-Terminal und ein sogenanntes Netzwerk-Management-System (TMN) aufweist, wobei das Verfahren eine flexible diensteabhängige Bandbreitensteuerung ermöglicht.

Bei der Erfindung wird das sogenannte ADSL (Asymmetric Digital Subscriber Line)-System verwendet, das in jüngster Zeit immer größere Verbreitung findet. Das ADSL-System ist beispielsweise beschrieben in der Schrift von Veeneman, Olshansky, GTE Laboratories Incorporated, "ADSL for Video and Data Services", IEEE Communications Conference, 1995,Seiten 837 -841; oder Chow, Cioffi, Amati Communications Corporation, "A Multi-drop ADSL Distribution Network", IEEE Communications Conference, 1994, Seiten 456-460.

Bei diesem asymmetrischen Übertragungssystem ist der Datenstrom von einem Benutzer-Terminal zu einem Server wesentlich kleiner als der umgekehrte Datenstrom, also der von dem Server zu dem Benutzer-Terminal. Typischerweise beträgt der Datenstrom von dem Benutzer-Terminal zu dem Server einige Kilobits pro Sekunde, wohingegen der Datenstrom von dem Server zu den Benutzer-Terminals ein oder mehrere Megabit pro Sekunde (beispielsweise 6 Megabit/s bei Standard-Telefonleitungen) betragen kann. Die Obergrenze wird dabei von den Leitungsverhältnissen vorgegeben. ADSL eignet sich daher insbesondere für sogenannte Video on demand oder WWW-Anwendungen, bei denen allgemein die zu übertragenden Daten von dem Benutzer-Terminal zu einem Server wesentlich weniger sind als in der Umkehrrichtung.

Bei ADSL wird ein Modulationsschema verwendet, um Daten insbesondere zu Benutzer-Terminals von Privatkunden mittels der gleichen verdrehten Kupferleitungen zu übertragen, die beispielsweise auch für ISDN-Dienste verwendet werden. Dadurch sind die installationskosten für dieses neue System für den Netzbetreiber verhältnismäßig gering. Es kann daher zusammen mit herkömmlichen Telefondiensten verwendet werden, wohingegen es aber die Vorteile wesentlich höherer Übertragungsraten aufweist, nämlich etwa 6 bis 8 Megabit pro Sekunde von dem Server zu dem Benutzer-Terminal und bis zu 640 Kilobit pro Sekunde von dem Benutzer-Terminal zu dem Server.

Eine wesentliche.Eigenschaft des ADSL-Sysetms im Vergleich zu bspw. dem ISDN-System ist, daß das benutzerseitige und das betreiberseitige Modem physisch miteinender (bspw. mittels einer weit verbreiteten Kupferleitung) verbunden sein müssen und nicht lediglich jeweils an einem Ende einer verschalteten und vermittelten Telefonverbindung vorliegen können. Somit muß sich ein Modem gewöhnlicherweise an einem Zentralverteiler der das ADSL-System betreibenden Telefongesellschaft befinden, und das andere Modem befindet sich entsprechend in dem Gebäude des Benutzers. Das Modem, das sich in der Schalt-Station (Zentralverteiler) der Telefongesellschaft verbindet, wird ATU-C (ADSL Terminal Unit Central) genannt. Das Modem, das sich seitens des Benutzers befindet, wird ATU-R (ADSL Terminal Unit Remote) genannt.

Eine weitere Eigenschaft des ADSL-Systems ist es, daß die Bandbreite seitens des Betreibers eingestellt werden kann. Zur Zeit erfolgt dabei bei den ADSL-Systemen betreiberseitig eine systembedingte Einstellung der Bandbreite, d.h. die Bandbreite wird entsprechend der Fähigkeiten der zur Übertragung verwendeten Anschlußleitung bestimmt. Bei diesem Verfahren, das auch Rate-Adaptive-ADSL genannt wird, wird die maximale mögliche Bandbreite von dem System selbständig eingestellt. Es wird also immer die technisch maximal mögliche Bandbreite verwendet, die in der Regel durch die Leitungsbedingungen vorgegeben ist.

Aus der EP 0 806 852 A2 ist ein Multimode-Digitalmodem für ADSL-Übertragungen bekannt. Bei einem Initialisierungsverfahren führen die beiden beteiligten Modems an beiden Enden einer Leitung ein "Verhandlungsverfahren" (Rate Negotiation Method) aus. Jedes der beteiligten Modems übermittelt dem jeweils anderem seine Möglichkeiten und Wünsche bezüglich der für eine Übertragung zu wählenden Datenübertragungsrate. Die tatsächlich bei der Übertragung verwendete Datenübertragungsrate wird dann gemäß einem Algorithmus festgelegt.

Aus der WO96/37069 ist ein Videokonferenz- und Multimediasystem bekannt. Eine digitale Datenübertragung kann mit verschiedenen Bandbreiten erfolgen, wobei die aktuell verwendete Bandbreite angezeigt wird.

Aufgabe der vorliegenden Erfindung ist es, eine flexible, diensteabhängige Steuerung der Bandbreite bei einem ADSL-System bereitzustellen, bei der die systembedingte maximale Bandbreite lediglich die obere Grenze der wählbaren Bandbreiten darstellt.

Durch die erfindungsgemäße diensteabhängige Steuerung der Bandbreite bei einem ADSL-System ergibt sich somit für den Betreiber des ADSL-Systems verschiedene Möglichkeiten der Dienstedifferenzierung, die sich in einer größeren möglichen Marktabschöpfung und damit in einer erhöhten Profitabilität für den Betreiber niederschlagen.

Erfindungsgemäß wird die oben genannte Aufgabe durch ein Verfahren mit den Merkmalen des Anspruchs 1 gelöst.

Erfindungsgemäß ist also ein Verfahren zur digitalen Datenübertragung mit variabler Bandbreite in einem Netzwerk vorgesehen, wobei das Netzwerk wenigstens einen Server, wenigstens ein Benutzer-Terminal und ein Netzwerk-Management-System aufweist. Zuerst wird dabei eine Verbindung von dem Benutzer-Terminal zu dem Server wenigstens teilweise mittels einer ADSL-Verbindung (d.h. von der ATU-R seitens des Benutzers zu der ATU-C seitens des Betreibers) hergestellt. Dann werden Bandbreiten-Selektionsdaten von dem Benutzer-Terminal über die ADSL-Verbindung zu dem dem Server zugeordneten Netzwerk-Management-System übertragen. Die eigentliche Übertragung von Informationsdaten von dem Server zu dem Benutzer-Terminal über die ADSL-Verbindung und/oder umgekehrt kann dann mit einer Bandbreite entsprechend dem zuvor übertragenen Bandbreiten-Selektionsdaten erfolgen, wobei gemäß einer Eigenschaft des ADSL-Systems die Bandbreite der Übertragung von dem Server zu dem Benutzer-Terminal wesentlich größer dem Benutzer-Terminal wesentlich größer (Faktor 10 bis 100) als die von dem Benutzer-Terminal zu dem Server ist..

Die Bandbreiten-Selektionsdaten können beispielsweise über den sogenannten EOC-Kanal (embedded operations channel) der ADSL-Verbindung übertragen werden.

Das Netzwerk-Management-System kann Abrechnungsdaten abhängig von den zuvor von dem Benutzer gewählten und zu dem Netzwerk-Management-System übertragenen Bandbreiten-Selektionsdaten an eine den Server zugeordnete Abrechnungseinrichtung (Billing System) übermitteln. Allgemein werden die von der Abrechnungseinrichtung berechneten Gebühren um so höher sein, je größer die von dem Benutzer gewählte Bandbreite ist.

Vor der Übertragung der Bandbreiten-Selektionsdaten zu dem Benutzer-Terminal können eine Anzahl vorbestimmter, durch den Benutzer auswählbarer Bandbreiten Maske übertragen werden und beispielsweise in Form einer Maske an einer Anzeigevorrichtung des Benutzer-Terminals angezeigt werden. Die maximale der auswählbaren vorbestimmten Bandbreiten kann dabei automatisch abhängig von den Systemfähigkeiten (insbesondere den Leitungsbedingungen der zur Übertragung verwendeten Anschlußleitung) eingestellt sein.

Das Netzwerk-Management-System kann nach Erhalt der Bandbreiten-Selektionsdaten Einstellungsdaten an die ATU-C des ADSL-Systems übertragen, wobei die ATU-C die Einstellungsdaten über den EOC-Kanal des ADSL-Systems zur Synchronisierung der Einstellungen an die ATU-R des ADSL-Systems weitergeben kann.

Weitere Merkmale und Eigenschaften der vorliegenden Erfindung werden aus der Beschreibung eines Ausführungsbeispiels und Bezug nehmend auf die begleitenden Figuren der Zeichnungen besser ersichtlich. Dabei zeigen:
Fig. 1 ein Blockschaltbild, das die Ausführung des erfindungsgemäßen Verfahrens erläutert,
Fig. 2 den Aufbau eines ADSL (Asymmetric Digital Subscriber Line)-Systems, und
Fig. 3 eine grafische Darstellung der Dienste-Adaption abhängig von der Zahlungsbereitschaft gemäß einer empirischen Ermittlung.

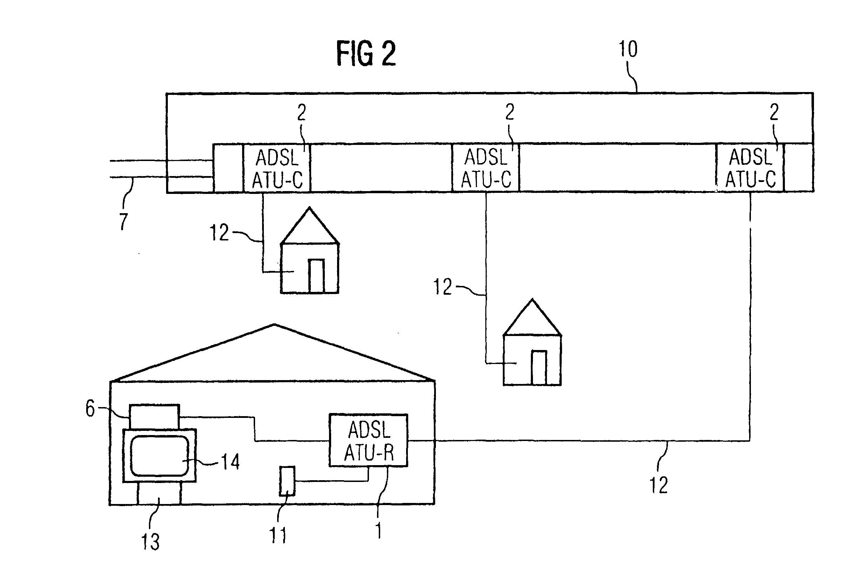

Zuerst sollen die grundlegenden Bestandteile eines ADSL-Systems bezugnehmend auf Fig. 2 erläutert werden. In Fig. 2 ist mit dem Bezugszeichen 10 ein Zentralverteiler einer Betreibergesellschaft bezeichnet, der mehrere ATU-C 2 eines ADSL-Systems enthalten kann. Zu diesem Zentralverteiler 10 werden in bekannter Weise Daten über eine Leitung 7 beispielsweise mittels des Internet-Protokolls oder HTTP-Protokolls übertragen. Jede ATU-C 2 des ADSL-Systems ist physikalisch mittels einer herkömmlichen Kupferleitung 12 direkt (ohne Umschaltungen) mit einer ATU-R 1 verbunden, die sich beispielsweise in dem Gebäude eines Benutzers befindet. Da das ADSL eine direkt physikalische Verbindung von dem betreiberseitigen Modem (ATU-C 2) zu dem benutzerseitigen Modem (ATU-R 1) benötigt, muß in dem Zentralverteiler 10 pro Benutzer-Terminal eine ATU-C 2 vorgesehen sein.

Da das ADSL-System herkömmliche Telefonleitungen 12 (Kupferleitungen) verwenden kann, kann das Modem 1 gleichzeitig einen konventionellen Fernsprechanschluß (POTS) 11 versorgen. Die eigentlichen Informationen des ADSL-Systems hingegen können beispielsweise zu einem MPEG-Dekodierer 6 übertragen werden, der wiederum mit einem Benutzer-Terminal 13 verbunden ist, das einen Bildschirm 14 aufweist.

Beipielsweise können 10 verschiedene (diskrete) Klassen für ADSL-Übertragungsgeschwindigkeiten (Bandbreiten) verwendet werden, wie es in der folgenden Tabelle dargestellt ist.

| Klasse | Downstream (vom Server zum Benutzer) | Upstream (vom Benutzer zum Server) |
|---|---|---|
| 1 | 6,144 Mbps | 64 kbps |
| 2 | 4,608 Mbps | 64 kbps |
| 3 | 3,072 Mbps | 64 kbps |
| 4 | 1,536 Mbps | 64 kbps |
| 5 | 6,2 Mbps | 576 kbps |
| 6 | 3,1 Mbps | 384 kbps |
| 7 | 1,544 Mbps | 160 kbps |
| 8 | 768 kbps | 64 kbps |
| 9 | 384 kbps | 32 kbps |
| 10 | 160 kbps | 16 kbps |
| (Veeneman, 838-840) | | |

Alternativ kann die Bandbreite der ADSL-Übertragung stufenlos übertragbar sein.

Die Erfindung macht sich diese Wählbarkeit der Bandbreite zunutze, um die Profitabilität des ADSL-Systems für den Betreiber zu erhöhen.

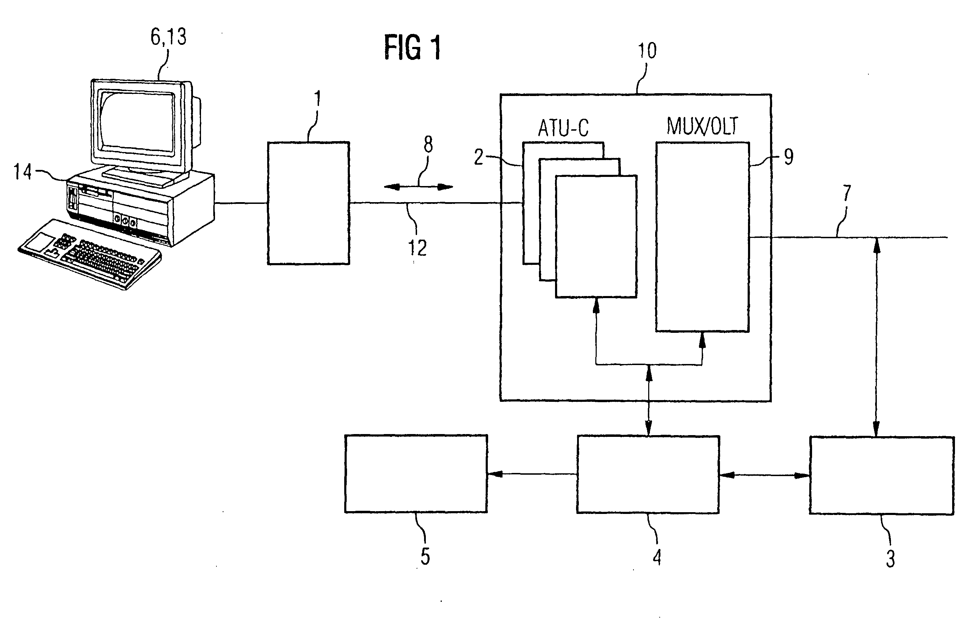

Dies soll nun näher Bezug nehmend auf Fig. 1 erläutert werden. In Fig. 1 ist ein Benutzer-Terminal 13 mit einem Bildschirm 14 sowie einem MPEG-Dekodierer 6 zu sehen, das mit einer ATU-R (ADSL-Terminal Unit Remote) 1 verbunden ist. Wie bereits aus Fig. 2 bekannt ist die ATU-R 1 physikalisch mittels einer ADSL-Leitung 12 mit dem Zentralverteiler 10 des Betreibers verbunden. In dem Zentralverteiler 10 ist eine mit der ATU-R 1 direkt verbundene ATU-C (ADSL Terminal Unit Central) 2 sowie ein Multiplexer 9 vorgesehen. Dem Multiplexer 9 werden einerseits Daten 7 gemäß dem Internet-Protokoll (HTTP-Protokoll) im Asynchron-Übertragungsmodus (ATM) zugeführt. Diese Daten können beispielsweise von einem WWW-Server 3 des Internets bereitgestellt werden. Der Zentralverteiler 10 ist weiterhin wie in Fig. 1 ersichtlich mit einem Netzwerk-Management-System 4 verbunden, mit dem er Verwaltungsdaten (Managementdaten) austauscht, die für den Betrieb des Netzes erforderlich sind.

Das Netzwerk-Management-System (Telecommunications Management Network, TMN) 4 ist ein eigenes Netzwerk, das dem Betreiber (Service Provider) beim Betrieb des Telekommunikationsnetzwerks hilft. Mit anderen Worten, ein TMN ist ein Netzwerk an Systemen, das zur Verwaltung von Telekommunikations-Netzwerken zur Bedienung von Benutzern verwendet wird. Ein TMN ist logisch von dem zu verwaltenden Netzwerk getrennt, und kann auch physikalisch von diesem getrennt sein. Andererseits kann ein TMN auch einen Teil des Telekommunikations-Netzwerks für seine eigene Kommunikation verwenden.

Gemäß der Erfindung erfolgt die Bandbreitensteuerung mittels des in dem ADSL-System vorhandenen EOC (embedded operations channel) 8. Der EOC 8 ist dabei ein Kanal, der zur Verwaltung des ADSL-Systems vorgesehen ist und somit logisch dem Netzwerk-Managementsystem 4 zugeordnet ist. Mittels des EOC 8 hat der Betreiber des ADSL-Systems die Möglichkeit, die in dem angebotenen Dienst festgelegten Bandbreiten (siehe beispielsweise die obige Tabelle) für den sogenannten Downstream-Kanal (vom Server zum Benutzer-Terminal) sowie für den Upstream-Kanal (vom Benutzer-Terminal zum Server) mittels des Netzwerk-Management-Systems 4 einzustellen. Gemäß der Erfindung werden die Bandbreiten-Einstellungen insbesondere über Internet- oder World-Wide-Web-Interfaces von dem Betreiber dem Benutzer angeboten und dann durch den Benutzer des Systems selbst vorgenommen.

Dazu ist das Netzwerk-Management-System 4 mit den entsprechenden Interfaces zum World-Wide-Web und zum Abrechnungssystem (Billing System) 5 des Betreibers ausgestattet, um Gebühren entsprechend der vom Benutzer gewählten Bandbreite zu erfassen.

Nun soll der Ablauf des erfindungsgemäßen Verfahrens im Detail beschrieben werden. Der Benutzer einer ADSL-Verbindung 12 stellt beispielsweise über das IP (Internet Protokoll) und das HTTP-Protokoll eine Verbindung zum WWW-Server 3 des Betreibers her. Nach einer entsprechenden Identifizierung und Authentifizierung bekommt dann der Benutzer auf dem Bildschirm 14 seines Terminals 13 eine Maske zur Einstellung der Bandbreitenparameter seiner ADSL-Verbindung angeboten. Diese Maske kann bspw. die Klassen der oben gezeigten Tabelle anbieten. Das System kann dabei automatisch die durch die Leitungseigenschaften vorgegebenen maximale Bandbreite feststellen und als obere Grenze der auswählbaren Bandbreiten wählen. Der Benutzer kann dann eine Option wählen, d.h. er kann Bandbreiten-Selektionsdaten von seinem Terminal 13 über die ADSL-Verbindung 12 dem Betreiber übermitteln, der die Annahme der gewählten Selektion bestätigt. Die Auswahl einer Bandbreite, die über der, bspw. vom Netzwerk-Managementsystem 4 erfaßten technisch maximalen Bandbreite liegt, kann dabei gesperrt sein.

Gleichzeitig können die Parameter der vom Benutzer gewünschten Option sowie die Benutzerdaten (Identifizierung etc.) an das Netzwerk-Management-System 4 übertragen werden. Das Netzwerk-Management-System 4 kann dann die erforderlichen Parameter für die gewünschte Option zunächst an die ATU-C 2 in dem Zentralverteiler 10 des Betreibers übermitteln. Die ATU-C 2 kann dann die entsprechenden Informationen über den EOC 8 der ADSL-Verbindung 12 an die ATU-R 1 weitergeben, wodurch eine synchronisierte Einstellung der Modems 1, 2 der ADSL-Verbindung 12 auf den neuen Parameter gewährleistet wird. Zur Einstellung der Parameter können im EOC 8 die Betriebscodes (Opcodes) 19, 1a, 1c, 1f verwendet werden, die für herstellerspezifische Protokolle reserviert sind (ANSI T 1.413).

Die Änderung der Parameter für die gewählte Bandbreite können entweder sofort oder bei der nächsten Verbindungsaufnahme wirksam werden.

Nachdem die Änderung der Parameter vom Netzwerk-Management-System durchgeführt wurden, können die zugehörigen Abrechnungsinformationen an das Abrechnungssystem 5 des Betreibers weitergeleitet werden. Das Abrechnungssystem 5 des Betreibers kann dann dem Benutzer die Verbindungszeit zu dem WWW-Server 3 abhängig von der gewählten Bandbreite in Rechnung stellen.

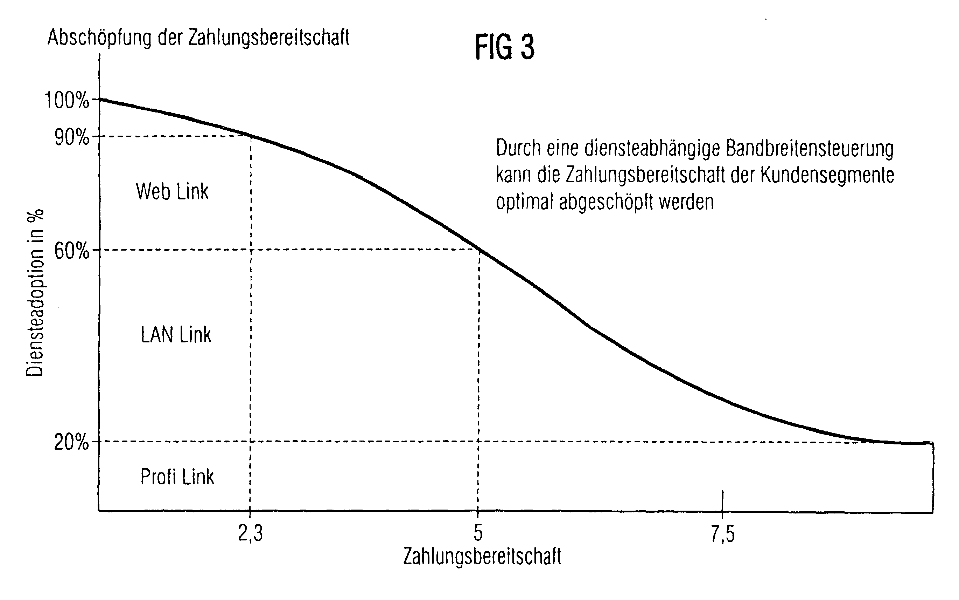

Gemäß der Erfindung werden also die vorhandenen Möglichkeiten von ADSL-Systemen für ein breites Spektrum von Diensten vorteilhaft ausgenutzt. Dieses breite Dienstspektrum erlaubt dem Betreiber der ADSL-Systeme spezifische Kundensegmente mit maßgeschneiderten Diensten zu bedienen (siehe Fig. 3), und dadurch die typische Zahlungsbereitschaft der Kundensegmente für bestimmte Übertragungsraten abzuschöpfen. Gemäß dem Stand der Technik sind die vorhandenen ADSL-Systeme so ausgelegt, daß immer die maximal von der Leitung vorgegebene Geschwindigkeit benutzt wird, unabhängig davon, ob der Benutzer die volle Bandbreite benötigt oder nicht. Durch diese nicht vorhandene Differenzierung des Diensteangebots verschenkt der Betreiber ein Umsatzpotential, da einerseits einige Kunden mehr bezahlen würden und andere Kunden den Dienst nicht in Anspruch nehmen, da angebotene Leistung und Preis die Anforderungen des Kunden übersteigen. Die Nutzung eines differenzierten Diensteangebots kann für den Betreiber bis zu einer Verdoppelung der erzielbaren Umsätze führen. Für den Hersteller der mit einer flexiblen diensteabhängigen Bandbreitesteuerung versehenen ADSL-Lösung bedeutet dies bei unwesentlich höherem Aufwand einen wesentlich höheren erzielbaren Marktpreis, da diese Lösung beim Betreiber zu wesentlich höheren Umsätzen führt.

## Patentansprüche

1. Verfahren zur digitalen Datenübertragung mit variabler Bandbreite in einem Netzwerk, das wenigstens einen Server (3), ein Benutzer-Terminal (6) und ein Netzwerk-Managementsystem (4) aufweist,
aufweisend die folgenden Schritte:
- Herstellen einer Verbindung von dem Benutzer-Terminal (6) zu dem Server (3) wenigstens teilweise mittels einer ADSL-Verbindung (12),
- Übertragung (8) von Bandbreiten-Selektionsdaten von dem Benutzer-Terminal (6) zu dem dem Server (3) zugeordneten Netzwerk-Managementsystem (4), und
- Übertragung von Informationsdaten von dem Server (3) zu dem Benutzer-Terminal (6) über die ADSL-Verbindung (12) und/oder umgekehrt mit einer Bandbreite entsprechend den zuvor übertragenen Bandbreiten-Selektionsdaten, wobei das Netzwerk-Managementsystem (4) Abrechnungsdaten abhängig von den zuvor übertragenen Bandbreiten-Selektionsdaten an eine dem Server (3) zugeordnete Abrechnungseinrichtung (5) übermittelt.

2. Verfahren nach Anspruch 1,
**dadurch gekennzeichnet,**
**daß** die Bandbreiten-Selektionsdaten über den EOC-Kanal (8) der ADSL-Verbindung (12) übertragen werden.

3. Verfahren nach einem der vorhergehenden Ansprüche,
**dadurch gekennzeichnet,**
**daß** vor der Übertragung (8) der Bandbreiten-Selektionsdaten zu dem Benutzer-Terminal (6) mehrere vorbestimmte, durch den Benutzer auswählbare Bandbreiten übertragen und an einer Anzeigevorrichtung (14) des Benutzer-Terminals (6) angezeigt werden.

4. Verfahren nach Anspruch 3,
**dadurch gekennzeichnet,**
**daß** die maximale der auswählbaren vorbestimmten Bandbreiten abhängig von den Systemfähigkeiten eingestellt ist.

5. Verfahren nach einem der vorhergehenden Ansprüche,
**dadurch gekennzeichnet,**
**daß** das Netzwerk-Managementsystem (4) nach Erhalt der Bandbreiten-Selektionsdaten Einstellungsdaten an die ATU-C (2) des ADSL-Systems überträgt, die die Einstellungsdaten über den EOC-Kanal (8) des ADSL-Systems zur Synchronisierung der Einstellungen an die ATU-R (1) des ADSL-Systems weitergibt.

## Claims

1. Method for digital data transmission with a variable bandwidth in a network which has at least one server (3), a user terminal (6) and a network management system (4),
having the following steps:
- establishment of a connection between the user terminal (6) and the server (3) at least partly by means of an ADSL connection (12),
- transmission (8) of bandwidth selection data from the user terminal (6) to the network management system (4) assigned to the server (3), and
- transmission of information data from the server (3) to the user terminal (6) via the ADSL connection (12) and/or in the opposite direction with a bandwidth corresponding to the previously transmitted bandwidth selection data, in which case the network management system (4) communicates billing data to a billing device (5), assigned to the server (3), in a manner dependent on the previously transmitted bandwidth selection data.

2. Method according to Claim 1,
**characterized**
**in that**, the bandwidth selection data are transmitted via the EOC channel (8) of the ADSL connection (12).

3. Method according to one of the preceding claims,
**characterized**
**in that**, prior to the transmission (8) of the bandwidth selection data to the user terminal (6), a plurality of predetermined bandwidths which can be selected by the user are transmitted and displayed on a display device (14) of the user terminal (6).

4. Method according to Claim 3,
**characterized**
**in that** the maximum bandwidth of the predetermined bandwidths that can be selected is set in a manner dependent on the system capabilities.

5. Method according to one of the preceding claims,
**characterized**
**in that**, once the bandwidth selection data have been received, the network management system (4) transmits setting data to the ATU-C (2) of the ADSL system, which forwards the setting data to the ATU-R (1) of the ADSL system via the EOC channel (8) of the ADSL system for the purpose of synchronizing the settings.

## Revendications

1. Procédé de transmission numérique de données à largeur de bande variable dans un réseau comportant au moins un serveur (3), un terminal utilisateur (6) et un système de gestion de réseau (4), présentant les étapes suivantes:
- établissement d'une liaison du terminal utilisateur (6) vers le serveur (3) au moins en partie au moyen d'une liaison ADSL (12),
- transmission (8) de données de sélection de largeur de bande du terminal utilisateur (6) vers le système de gestion de réseau (4) affecté au serveur (3) et
- transmission de données d'informations du serveur (3) vers le terminal utilisateur (6) par l'intermédiaire de la liaison ADSL (12) et/ou inversement avec une largeur de bande correspondant aux données de sélection de largeur de bande préalablement transmises, le système de gestion de réseau (4) transmettant à un dispositif de facturation (5) affecté au serveur (3) des données de facturation en fonction des données de sélection de largeur de bande préalablement transmises.

2. Procédé selon la revendication 1,
**caractérisé en ce que**
les données de sélection de largeur de bande sont transmises sur le canal EOC (8) de la liaison ADSL (12).

3. Procédé selon l'une des revendications précédentes,
**caractérisé en ce que**,
avant la transmission (8) des données de sélection de largeur de bande vers le terminal utilisateur (6), plusieurs largeurs de bande prédéterminées, sélectionnables par l'utilisateur, sont transmises et affichées sur un dispositif d'affichage (14) du terminal utilisateur (6).

4. Procédé selon la revendication 3,
**caractérisé en ce que**
la largeur de bande maximale parmi les largeurs de bande prédéterminées sélectionnables est réglée en fonction des capacités du système.

5. Procédé selon l'une des revendications précédentes,
**caractérisé en ce que**
le système de gestion de réseau (4), après la réception des données de sélection de largeur de bande, transmet des données de réglage à l'ATU-C (2) du système ADSL, lequel transmet les données de réglage à l'ATU-R (1) du système ADSL sur le canal EOC (8) du système ADSL pour la synchronisation des réglages.
